# EUROPEAN PATENT APPLICATION

(11) **EP 4 046 865 A1**
(43) Date of publication of application: **24.08.2022**
(21) Application number: 22157110.2
(22) Date of filing: 16.02.2022
(51) Int. Cl.: B60N 2/844, B60N 2/853, B60N 2/856, B60N 2/859, B60N 2/862, B60N 2/874, B60N 2/876

(54) **HEADREST LATCH WITH SHAPE MEMORY ALLOY RELEASE ASSEMBLY**

(30) Priority: 17.02.2021 US 202163150384 P
(71) Applicant: Windsor Machine and Stamping (2009) Ltd., Windsor, Ontario N9C 2L8 (CA)
(72) Inventor: Little, Mark, Windsor, 9NC 2L8 (CA)
(74) Representative: Manitz Finsterwald Patent- und Rechtsanwaltspartnerschaft mbB

(57) **Abstract**

A vehicle headrest assembly includes a latch mechanism moveable between an engaged position and a release position. The vehicle headrest assembly also includes a shape memory alloy (SMA) release assembly operatively coupled to the latch mechanism to selectively move the latch mechanism from the engaged position to the release position. The SMA release assembly includes an actuator base including a pair of tracks defining a slot, the actuator base including a plurality of retaining tabs. The SMA release assembly also includes a printed circuit board (PCB) retained directly to the actuator base and disposed adjacent the plurality of retaining tabs. The SMA release assembly further includes a slide disposed within the slot and retained to the actuator base with the pair of tracks. The slide is moveable to contact and bias the latch mechanism to the release position upon energization and contraction of a SMA wire.

## Description

### FIELD OF THE INVENTION

This application claims the benefit of priority to U.S. Provisional Patent Application No. 63/150,384, filed February 17, 2021, the disclosure of which is incorporated by reference herein in its entirety.

### FIELD OF THE INVENTION

The present invention relates to vehicle headrests and, more particularly, to a latch mechanism with a shape memory alloy release assembly for such headrest.

### BACKGROUND

This section provides background information related to the present disclosure which is not necessarily prior art.

An example component of an automobile that has historically been developed with an emphasis on strength and comfort is a headrest. Most automobiles include headrests atop an occupant's seat and in a position adjacent the occupant's head. Because headrests are specifically designed to interface with an occupant's head, they must be comfortable both tactilely and positionally. In addition to comfort, headrests must be able to withstand amounts of impact to prevent whiplash to the occupant during a rear end collision, and to a certain extent block foreign objects in the event of a crash or sudden braking situation.

As vehicles may be required to provide safety headrests for all passengers, and with several rows of seats in many popular models, the headrests may reduce the rear and side visibility of the driver, leading to potential safety issues. In the case of a vacant rear row seat, the upright headrest(s) simply result in obstructed visibility without any benefit, unless the driver takes the time and effort to rotate, lower, or otherwise remove the headrest(s) whenever the rear seats are empty. Furthermore, in some vehicle models an upwardly extending headrest in the upright position may obstruct the ability to rotate the seatbacks downwardly to form a cargo space with a generally flat surface. In this circumstance, it is necessary to retract the rear seat headrests before stowing the seatbacks, and doing this task manually only makes the task more arduous and less appealing to a consumer. It is therefore becoming increasingly popular to provide an electromechanical actuator to lower the headrests to improve driver visibility when rear seats are unoccupied. Although this may be accomplished with mechanisms that provide fully controllable vertical and/or tilting functionality, a more space and cost-effective approach is to employ a springloaded latch release mechanism with an electronic actuator to lower the headrests at the push of a button. Thus, the headrests may be lowered quickly without any substantial manual effort, and may be re-deployed (raised or extended) by manually engaging and raising the headrests when the rear seats are to be occupied.

### SUMMARY OF THE DISCLOSURE

This section provides a general summary of the disclosure and is not to be interpreted as a complete and comprehensive listing of all of the objects, aspects, features and advantages associated with the present disclosure.

According to one aspect of the disclosure, a vehicle headrest assembly includes a latch mechanism moveable between an engaged position and a release position, the engaged position maintaining a first rotational position of the vehicle headrest assembly, the release position allowing a spring force to bias the vehicle headrest assembly to a second rotational position. The vehicle headrest assembly also includes a shape memory alloy (SMA) release assembly operatively coupled to the latch mechanism to selectively move the latch mechanism from the engaged position to the release position. The SMA release assembly includes an actuator base including a pair of tracks defining a slot, the actuator base including a plurality of retaining tabs. The SMA release assembly also includes a printed circuit board (PCB) retained directly to the actuator base and disposed adjacent the plurality of retaining tabs. The SMA release assembly further includes a slide disposed within the slot and retained to the actuator base with the pair of tracks. The SMA release assembly yet further includes a SMA wire connected to a pair of electrical terminals of the PCB and to the slide, the slide moveable to contact and bias the latch mechanism to the release position upon energization and contraction of the SMA wire.

According to another aspect of the disclosure, a vehicle headrest assembly includes a latch mechanism moveable between an engaged position and a release position, the engaged position maintaining a first rotational position of the vehicle headrest assembly, the release position allowing a spring force to bias the vehicle headrest assembly to a second rotational position. The latch mechanism includes a lock plate fixed in a non-rotatable manner to an armature, the lock plate defining a detent slot. The latch mechanism also includes a lock pawl having a latch finger, the lock pawl rotatable between the engaged position and the release position, wherein the engaged position is defined by insertion of the latch finger in the detent slot, the release position defined by removal of the latch finger from the detent slot. The latch mechanism further includes a release lever. The latch mechanism yet further includes a pull rod operatively coupled to, or integrally formed with, the release lever, the pull rod operatively coupled to the lock pawl to move the lock pawl between the engaged position and the release position. The vehicle headrest assembly also includes a shape memory alloy (SMA) release assembly operatively coupled to the latch mechanism to selectively move the latch mechanism from the engaged position to the release position.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
FIG. 1 is a perspective view of a headrest assembly for an automobile that is pivotable in a fore-aft direction;
FIG. 2A is a side view of the headrest assembly in a first position;
FIG. 2B is a side view of the headrest assembly in a second position;
FIG. 3 is a perspective view of a latch mechanism disposed within the headrest assembly;
FIG. 4 is a perspective view of the latch mechanism with a shell of the headrest assembly removed;
FIG. 5 is a first perspective view of a shape memory alloy release assembly for the latch mechanism, the shape memory alloy release assembly in a first position;
FIG. 6 is a second perspective view of the shape memory alloy release assembly in the first position;
FIG. 7 is an enlarged, perspective view of a portion of the shape memory alloy release assembly;
FIG. 8 is a perspective view of a biasing component of the shape memory alloy release assembly;
FIG. 9 is a perspective view of the shape memory alloy release assembly in a second position; and
FIG. 10 is an enlarged, perspective view of a portion of the shape memory alloy release assembly in the second position.

### DETAILED DESCRIPTION

Example embodiments of the invention will now be described with reference to the accompanying drawings. However, it is to be understood that the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that some specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, where like numerals indicate corresponding parts throughout the views, illustrated is a headrest assembly intended for providing comfort and safety to occupants of a vehicle by allowing the headrest assembly to be pivotable in a fore-aft direction.

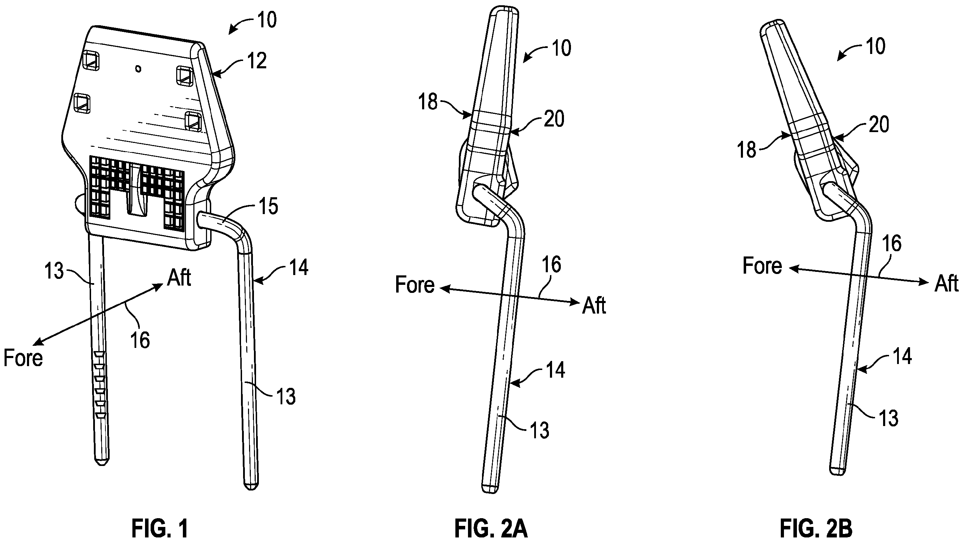

Referring to Figure 1, a headrest assembly is depicted. The headrest assembly is generally referred to with numeral 10. The headrest assembly 10 includes a housing 12 that at least partially encloses several components associated with stabilization and/or adjustment of the headrest assembly 10. A cushion and a cover (not shown) may be provided over the housing 12 for aesthetic purposes and occupant comfort. A base portion 14 (which may also be referred to as an "armature") is mountable to a vehicle seat and, more specifically, to a top surface of a vehicle seatback. The base portion 14 includes two substantially parallel posts 13 that extend substantially vertically and into the seatback. The two posts 13 are connected by a lateral portion 15 of the base portion 14.

As best illustrated in FIGS. 2A and 2B, the embodiments described herein allow pivoting of the headrest assembly 10 in a fore-aft direction 16 along the top surface of the seatback. The pivoting and pivotable movement described herein may also be referred to as rotating or tilting of the headrest. The extent of the movement of the headrest 10 may vary depending upon the particular application of use. In some arrangements, the headrest 10 is pivotal in the fore-aft direction up to about 180° to bring the headrest 10 into substantially flush contact with the seatback, but in other arrangements the headrest 10 is pivotable in the fore-aft direction to a smaller degree. FIG. 2A is a side view of the headrest assembly 10 in a substantially upright position, wherein the housing 12 is generally aligned in a substantially parallel relationship with the seatback. FIG. 2B is a side view of the headrest assembly 10 in a pivoted position, wherein the housing 12 is pivoted until it has a forward tilt with respect to the seatback, e.g., a tilt in the fore direction.

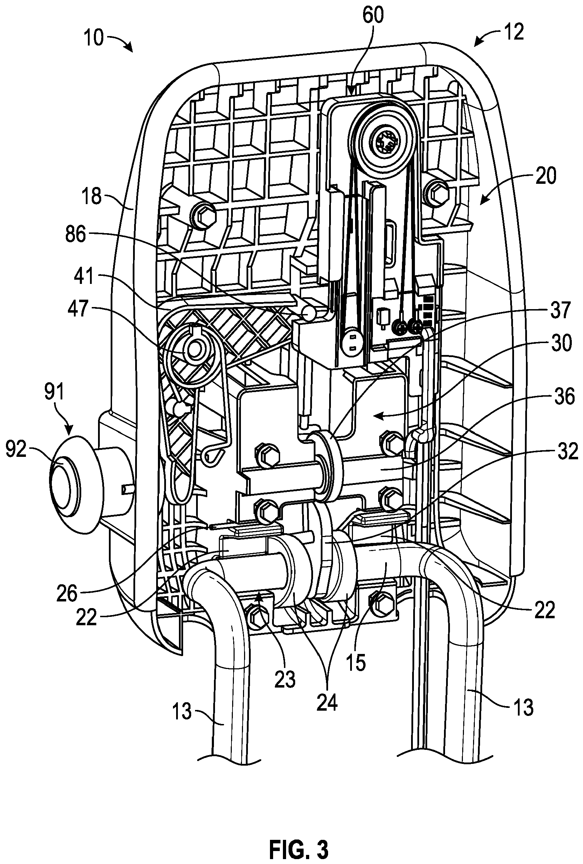

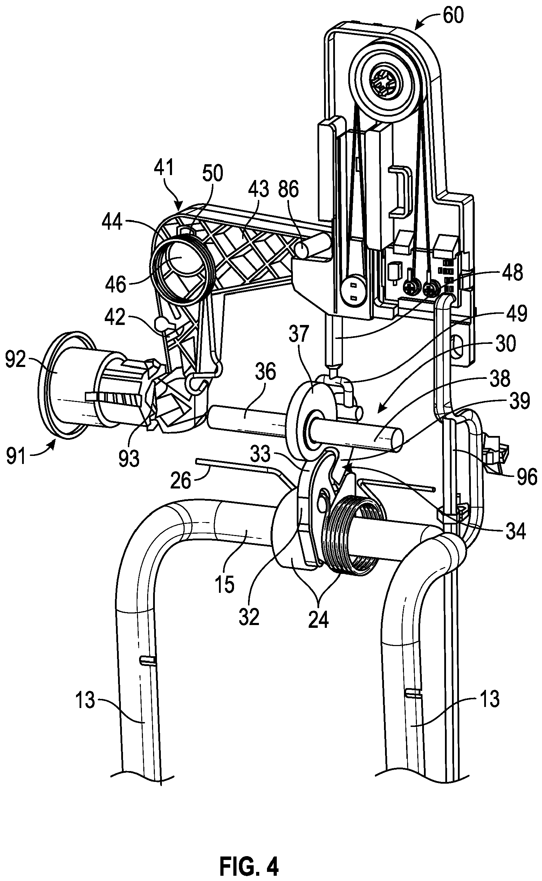

FIG. 3 is a partially disassembled rear perspective view of the headrest assembly 10. The housing 12 includes a front shell 18 which may be operatively coupled to a rear shell (not shown) to define a cavity 20 therebetween. The rear shell is removed to illustrate a latch mechanism 30 disposed within the cavity 20. FIG. 4 is a further disassembled view with the front shell 18 also removed.

Referring to FIGS. 3 and 4, the cavity 20 includes a pair of journal blocks 22 having a lateral passage 23 therethrough to receive the lateral portion 15 of the base portion 14 in rotatable fashion, thus enabling the housing 12 to move angularly between the retracted and deployed positions of FIGS. 2A and 2B. A pair of helical coil springs 24 are secured about the lateral portion 15 adjacent to the blocks 22, with one end of each spring 24 secured to the lateral portion 15 and the other end 26 impinging on a portion of the interior the housing 12. The springs 24 deliver a resilient restoring force that urges the housing 12 to rotate toward the second position of FIG. 2B. The latch mechanism 30 releasably secures the housing 12 in the upward position of FIG. 2A, or some intermediate position selected by a user. The latch mechanism 30 includes a lock plate 32 disposed between the springs 24 and secured to the lateral portion 15. The lock plate 32 includes a lobe 33 extending radially and eccentrically outwardly from the lateral portion 15, with a detent slot 34 extending into the upper edge portion of the lobe 33. A lock lever pivot shaft 36 is secured within in the housing 12, generally parallel with the lateral portion 15. A lock pawl 37 is secured to the shaft 36 in rotatable fashion in a generally coplanar relationship to lock plate 32. A lobe 38 extends radially and eccentrically from the edge of the lock pawl 37, with a latch finger 39 extending from the lobe 38. The latch finger 39 is shaped and dimensioned to be releasably engaged in the detent slot 34 of lock plate 32, an engagement that prevents rotation of the housing 12 about the lateral portion 15.

The latch mechanism 30 further includes a release lever 41 comprised of a first arm 42 and a second arm 43 extending from a central web portion 44 in a substantially common plane, with the arms 42, 43 oriented in a generally orthogonal relationship. An opening 46 in the web portion 44 engages a pivot lug 47 projecting in the interior of the housing 12 so that the release lever 41 may rotate in a limited angular excursion. A torsion spring 50 is disposed about the pivot lug 47 and is connected between the release lever 41 and the housing 12 to resiliently bias the release lever 41. A pull rod 48 is joined at its lower end to a yoke 49 that is pivotally secured to the lobe 38 of the lock pawl 37, and at its upper end to the distal end of arm 42 of the release lever 41. Rotation of the release lever 41 in the counter-clockwise direction (as viewed in FIGS. 3 and 4) translates the pull rod 48 upwardly, rotating the lock pawl 37 about shaft 36 and releasing the latch finger 39 from the detent slot 34. The restoring forces of springs 24 are then free to rotate the housing 12 about the lateral portion 15 so that the overall assembly moves into the disposition of FIG. 2B.

The headrest assembly 10 also includes a shape memory alloy (SMA) release assembly 60 that is operatively coupled to the latch mechanism 30. The SMA release assembly 60 is an electrically driven actuator that is arranged to rotate the release lever 41 to carry out the latch release action described herein.

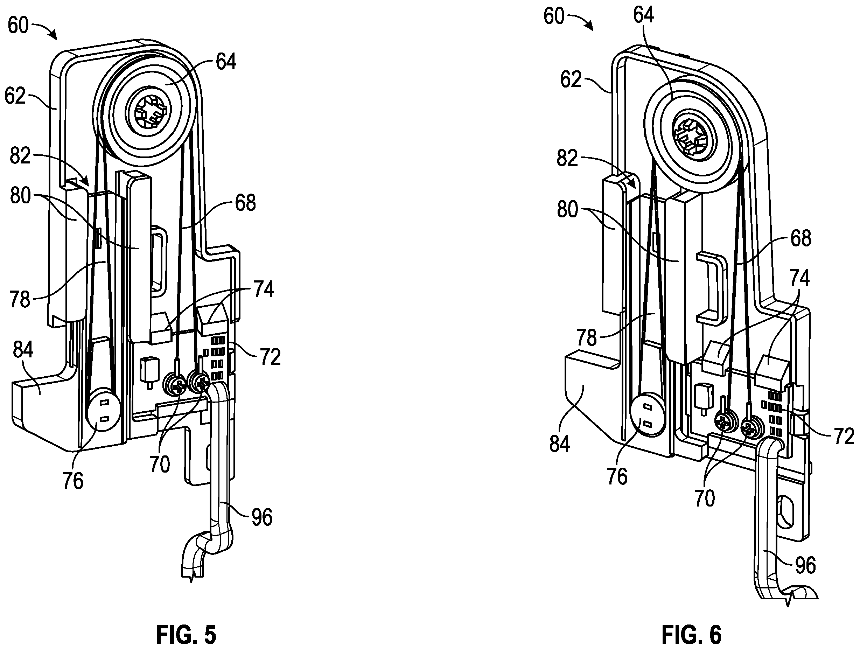

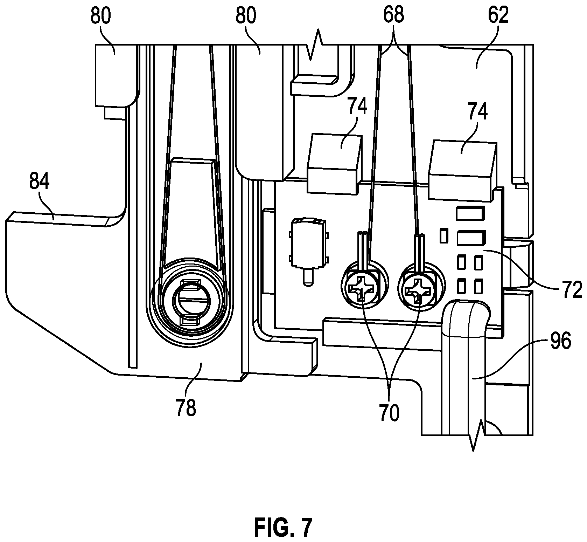

Referring now to FIGS. 5-7, with continued reference to FIGS. 3 and 4, the SMA release assembly 60 is illustrated in greater detail. FIGS. 5 and 6 show the SMA release assembly 60 in a first position, which corresponds to a non-actuated condition of the SMA release assembly 60. The SMA release assembly 60 includes an actuator base 62 that is positioned within the cavity 20 of the headrest assembly 10 and fixed therein. The actuator base 62 is formed of a non-metallic material, such as one comprising or consisting of plastic. A pulley wheel 64 is rotatably secured to the actuator base 62. In the illustrated embodiment, the pulley wheel 64 is positioned proximate an upper end of the actuator base 62. A length of SMA wire 68 is included and is anchored in adjacent electrical terminals 70 of a printed circuit board (PCB) 72. The PCB 72 is substantially smaller than the actuator base 62 and is operatively coupled thereto. In the illustrated embodiment, the PCB 72 is coupled to the actuator base 62 proximate a lower end of the actuator base 62 with a plurality of retaining tabs 74 which are integrally formed with the actuator base 62 and protrude therefrom. The SMA wire 68 is formed in a loop, with the distal portion of the loop secured about a turnaround plug 76. It is noted that the pulley wheel 64 is provided with two adjacent annular grooves in the periphery thereof to maintain spacing and separation of the wire portions from their adjacent counterparts.

The SMA release assembly 60 also includes a slide 78 that is secured to the actuator base 62. The slide 78 is formed of a non-metallic material, such as one comprising or consisting of plastic, for example. In the illustrated embodiment, a pair of tracks 80 protrude from the actuator base 62 to define a slot 82. A portion of the slide 78 is positioned within the slot 82 and is translatable therein in a substantially vertical manner, which is generally parallel to the longitudinal axis of the pull rod 48 (FIGS. 3 and 4). The turnaround plug 76 is mounted on the lower extent of the slide 78, such that actuation of the SMA wire 68 causes it to contract and draw the slide 78 to translate upwardly. A drive arm 84 extends laterally from a lower portion of the slide 78 and is positioned to contact a follower pin 86 projecting from the distal end of the arm 42 of the release lever 41 (FIGS. 3 and 4).

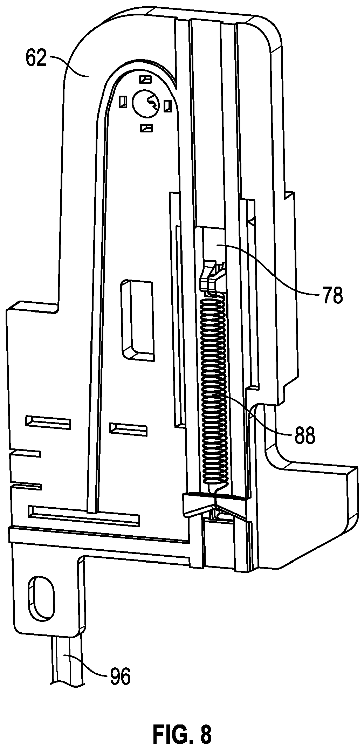

As shown in FIG. 8, a tension spring 88 is connected to the actuator base 62 and the slide 78 to resiliently bias the slide 78 downwardly toward the unactuated position of FIGS. 5 and 6.

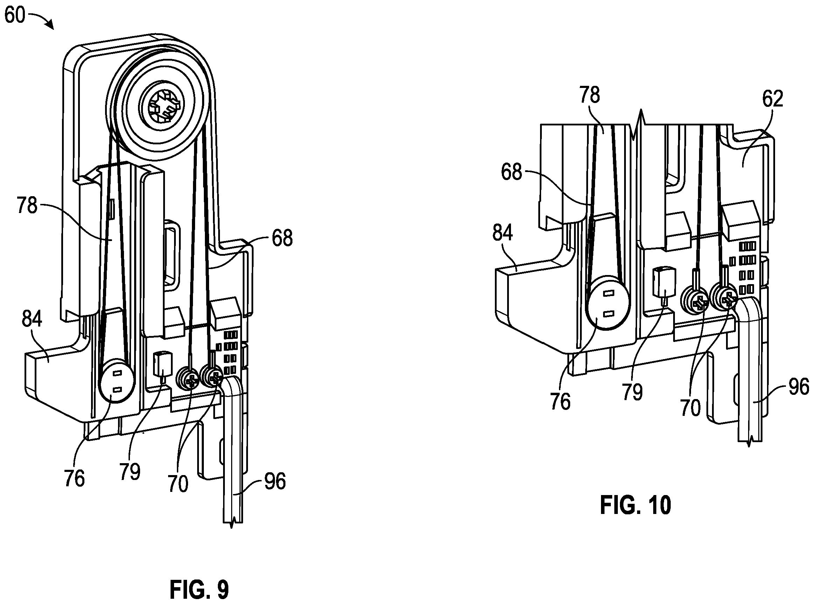

Referring now to FIGS. 9 and 10, the SMA actuator 60 is shown in a second position corresponding to an actuated condition which translates the slide 78 upwardly to rotate the release lever 41. The SMA release assembly 60 is activated by applying an electrical current to the SMA wire 68 through electrical terminals 70 to heat the wire 68, which causes it to contract when it surpasses a temperature threshold, which may be in the range of 75°C-100°C, for example. The contraction of the wire 68 applies tensile force to turnaround plug 76, causing the slide 78 to translate linearly upwardly. The drive arm 84 of slide 78 urges the follower pin 86 upwardly, thus rotating the release lever 41 and moving the pull rod 48 to rotate the lock pawl 37 and release the detent engagement of finger 39 in slot 34 (FIGS. 3 and 4). Movement of the slide 78 to the second position shown in FIGS. 9 and 10 results in a portion of the slide 78 contacting a micro switch 79 to shut off the current, thereby allowing the SMA wire 68 to cool and expand to the position shown in FIGS. 5 and 6. The micro switch 79 is mounted to the PCB 72.

Upon removal of the detent engagement between the finger 39 and slot 34, the springs 24 are enabled to rotate the housing 12 to the position of FIG. 2B. The housing 12 is restored to the upright, deployed position by manually rotating the housing 12 about the lateral portion 15 of the base portion 14. Finger 39 is urged by the spring forces to re-engage detent slot 34 to re-latch the housing in the upright position.

As shown in FIGS. 3 and 4, the housing 12 further includes provisions to enable manual release of the latch mechanism 30 whenever desirable or necessary. A push button assembly 91 is secured in a sidewall portion of housing 12, and includes a cap 92 reciprocally translatably mounted on a cylindrical housing. The cap 92 is resiliently biased to extend outwardly, and a central plunger 93 is joined to the cap 92. The inner end of plunger 93 impinges on a distal portion of arm 43 of the release lever 41. When the cap 92 is pressed inwardly against its spring bias, the plunger 93 urges the distal end of arm 43 to rotate counter-clockwise, as viewed in FIGS. 3 and 4. The pull rod 48 is translated upwardly to rotate the lock pawl 37 and release the detent engagement of finger 39 in slot 34. Upon removal of the detent engagement between the finger 39 and slot 34, the springs 24 are enabled to rotate the housing 12 to the position of FIG. 2B. It is noted that since the follower pin 86 is not connected to arm 84 of the slide 78, no movement or force is applied to the SMA release assembly 60 when manual operation of the latch mechanism 30 is carried out.

The SMA release assembly 60 is driven by power supplied through a power/control cable 96 that may be routed from the vehicle electrical power system through the base assembly 14 to the headrest assembly 10 (FIGS. 4-10). The SMA release assembly 60 may be activated by remote command, using a standard communications protocol function that is built into the SMA release assembly 60. This may be accomplished by employing a button or touch pad on the dashboard of the vehicle, or through a personal communications device that is equipped to interact with the communications module of the actuator, for example. The PCB 72 may include a microprocessor that is programmed to manage the application of electrical power to the SMA wire 68, and to respond to communications protocols from the vehicle or the driver's commands. It is noted that the use of an SMA wire loop 68 serves to double the force generated by contraction of the wire 68 when heated beyond the threshold temperature, and also enables connecting the wire ends to fixed electrical terminals 70, so that any moving electrical contact is eliminated.

In an alternative embodiment, an electrical push button may be provided in the headrest assembly 10 in addition to or in substitution to the manual push button assembly 91. The electrical push button is connected in the power circuit to the SMA release assembly 60, and may be employed to drive the SMA release assembly 60 to operate the latch mechanism 30 and lower the housing 12 from the deployed to the retracted position.

The embodiments disclosed herein utilize the non-metallic actuator base 62 and slide 78 to reduce weight and cost of the SMA release assembly 60.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A vehicle headrest assembly comprising:
a latch mechanism moveable between an engaged position and a release position, the engaged position maintaining a first rotational position of the vehicle headrest assembly, the release position allowing a spring force to bias the vehicle headrest assembly to a second rotational position; and
a shape memory alloy (SMA) release assembly operatively coupled to the latch mechanism to selectively move the latch mechanism from the engaged position to the release position, wherein the SMA release assembly comprises:
an actuator base including a pair of tracks defining a slot, the actuator base including a plurality of retaining tabs;
a printed circuit board (PCB) retained directly to the actuator base and disposed adjacent the plurality of retaining tabs;
a slide disposed within the slot and retained to the actuator base with the pair of tracks; and
a SMA wire connected to a pair of electrical terminals of the PCB and to the slide, the slide moveable to contact and bias the latch mechanism to the release position upon energization and contraction of the SMA wire.

2. The vehicle headrest assembly of claim 1, wherein the PCB is smaller than the actuator base.

3. The vehicle headrest assembly of claim 1 or 2, wherein the actuator base is formed of a non-metallic material.

4. The vehicle headrest assembly of any of claims 1-3, wherein the slide is formed of a non-metallic material.

5. The vehicle headrest assembly of any of claims 1-4, further comprising a micro switch attached to the PCB, wherein contact between a portion of the slide and the micro switch turns off the current applied to the SMA wire to move the latch mechanism to the engaged position.

6. The vehicle headrest assembly of any of claims 1-5, wherein the latch mechanism comprises:
a lock plate fixed in a non-rotatable manner to an armature, the lock plate defining a detent slot;
a lock pawl having a latch finger, the lock pawl rotatable between the engaged position and the release position, wherein the engaged position is defined by insertion of the latch finger in the detent slot, the release position defined by removal of the latch finger from the detent slot;
a release lever; and
a pull rod operatively coupled to, or integrally formed with, the release lever, the pull rod operatively coupled to the lock pawl to move the lock pawl between the engaged position and the release position.

7. The vehicle headrest assembly of claim 6, further comprising a follower pin protruding from the release lever, wherein a drive arm of the slide contacts the follower pin to move the lock pawl from the engaged position to the release position.

8. The vehicle headrest assembly of any of claims 1-7, further comprising a push button operatively coupled to the release lever, wherein the push button is accessible for manual depression by a user.

9. A vehicle headrest assembly comprising:
a latch mechanism moveable between an engaged position and a release position, the engaged position maintaining a first rotational position of the vehicle headrest assembly, the release position allowing a spring force to bias the vehicle headrest assembly to a second rotational position, wherein the latch mechanism comprises:
a lock plate fixed in a non-rotatable manner to an armature, the lock plate defining a detent slot;
a lock pawl having a latch finger, the lock pawl rotatable between the engaged position and the release position, wherein the engaged position is defined by insertion of the latch finger in the detent slot, the release position defined by removal of the latch finger from the detent slot;
a release lever; and
a pull rod operatively coupled to, or integrally formed with, the release lever, the pull rod operatively coupled to the lock pawl to move the lock pawl between the engaged position and the release position; and
a shape memory alloy (SMA) release assembly operatively coupled to the latch mechanism to selectively move the latch mechanism from the engaged position to the release position.

10. The vehicle headrest assembly of claim 9, wherein the SMA release assembly comprises:
an actuator base including a pair of tracks defining a slot, the actuator base including a plurality of retaining tabs;
a printed circuit board (PCB) retained directly to the actuator base and disposed adjacent the plurality of retaining tabs;
a slide disposed within the slot and retained to the actuator base with the pair of tracks; and
a SMA wire connected to a pair of electrical terminals of the PCB and to the slide, the slide moveable to contact and bias the latch mechanism to the release position upon energization and contraction of the SMA wire.

11. The vehicle headrest assembly of claim 10, wherein the PCB is smaller than the actuator base.

12. The vehicle headrest assembly of claim 10 or 11, further comprising a micro switch attached to the PCB, wherein contact between a portion of the slide and the micro switch turns off the current applied to the SMA wire to move the latch mechanism to the engaged position.

13. The vehicle headrest assembly of any of claims 10-12, further comprising a follower pin protruding from the release lever, wherein a drive arm of the slide contacts the follower pin to move the lock pawl from the engaged position to the release position.

14. The vehicle headrest assembly of any of claims 9-13, further comprising a push button operatively coupled to the release lever, wherein the push button is accessible for manual depression by a user.

15. The vehicle headrest assembly of any of claims 10-14, wherein the slide and the actuator base are each formed completely of plastic.
